# EUROPÄISCHE PATENTANMELDUNG

(11) **EP 4 342 660 A1**
(43) Veröffentlichungstag der Anmeldung: **27.03.2024**
(21) Anmeldenummer: 23179334.0
(22) Anmeldetag: 14.06.2023
(51) Int. Cl.: B29C 65/18, B29C 65/78, B29K 23/00

(54) **VORRICHTUNG ZUM VAKUUMVERSIEGELN**

(30) Priorität: 09.08.2022 DE 102022120049
(71) Anmelder: Acco UK Limited, Aylesbury Buckinghamshire HP21 8SZ (GB)
(72) Erfinder: Aries, Paul, West Midlands DY5 3YF (GB); Patel, Kaush, Middlesex HA6 1QJ (GB); Henderson, James, Hampshire PO6 4TE (GB)
(74) Vertreter: Patentanwälte Bregenzer und Reule Partnerschaftsgesellschaft mbB

(57) **Zusammenfassung**

Die Erfindung betrifft eine Vorrichtung (10) zum Vakuumversiegeln von Kunststoffhüllen (12) aus zwei Lagen (14, 16) transparenter Kunststofffolie, die an drei ihrer vier Seiten (18) fest miteinander verbunden sind und an der vierten Seite (20) eine Einschuböffnung (22) freilassen, mit einem Gehäuse (30), das ein Unterteil (34) und einen vom Unterteil (34) abnehmbaren Deckel (36) aufweist, wobei zwischen dem Unterteil (34) und dem Deckel (36) eine Vakuumkammer (38) angeordnet ist, mit einer Vakuumpumpe zur Evakuierung der Vakuumkammer (38) und mit einem Heizelement (44) zum Aufschmelzen der Kunststoffhüllen (12) entlang einer Versiegelungslinie (26) an der vierten Seite (20). Erfindungsgemäß ist eine Steuer- oder Regeleinrichtung zur Steuerung oder Regelung der Heizleistung des Heizelements in Abhängigkeit von der Dicke der am Heizelement anliegenden Kunststoffhülle(n) vorgesehen.

## Beschreibung

Die Erfindung betrifft eine Vorrichtung zum Vakuumversiegeln von Kunststoffhüllen gemäß Oberbegriff des Anspruchs 1.

Solche Kunststoffhüllen bestehen aus zwei Lagen transparenter Kunststofffolie, die an drei ihrer vier Seiten fest miteinander verbunden sind und an der vierten Seite eine Einschuböffnung freilassen. Durch die Einschuböffnung kann insbesondere ein Dokument zwischen die beiden Lagen der Kunststofffolie eingeschoben werden, bevor die Kunststoffhülle mittels einer solchen Versiegelungsvorrichtung luftdicht verschlossen wird, so dass das Dokument in der Kunststoffhülle vor äußeren Einflüssen geschützt aufbewahrt werden kann. Gegenüber einer Laminierung, bei der das Dokument zwischen zwei Kunststofffolien eingelegt wird, welche durch Erhitzen mit dem Dokument und miteinander verbunden werden, weist eine solche Vakuumversiegelung den Vorteil auf, dass das Dokument nicht stoffschlüssig mit den Kunststofffolien verbunden wird. Insbesondere kann die Kunststoffhülle später aufgetrennt werden, so dass das Dokument aus ihr wieder entnommen werden kann. In der Regel bestehen die zwei Lagen transparenter Kunststofffolie aus unterschiedlichen Materialien, wobei eine obere, eine beschriftete Seite des Dokuments bedeckende Lage eine möglichst hohe Transparenz und eine untere, die Rückseite des Dokuments bedeckende Lage eine möglichst hohe Steifigkeit aufweisen sollen. Diese Eigenschaften können durch geeignete Materialwahl erreicht werden oder aber beispielsweise durch Prägungen der unterseitigen Lage. Zudem ist es möglich, nur eine Kunststoffhülle in einem Arbeitsgang zu evakuieren und zu versiegeln oder aber mehrere Kunststoffhüllen gleichzeitig in das Gehäuse einzulegen und alle zusammen in einem Arbeitsgang zu evakuieren und zu versiegeln. Im letzteren Fall liegen die Kunststoffhüllen flächig aufeinander. Dabei ist festzuhalten, dass sich die obigen Ausführungen sowohl auf vorbekannte Vorrichtungen und Verfahren zum Vakuumversiegeln von Kunststoffhüllen als auch auf die vorliegende Erfindung beziehen.

Bei vorbekannten Vorrichtungen zum Vakuumversiegeln besteht oft das Problem, dass bei zu langer Heizdauer oder zu hoher Heizleistung die Kunststoffhüllen auch an ihren Außenseiten aufschmelzen und mit dem Gehäuse, dem Heizelement oder miteinander verkleben. Bei zu kurzer Heizdauer oder zu geringer Heizleistung dagegen schmelzen die Kunststoffhüllen an ihren Innenseiten nicht genügend auf, so dass keine ausreichende Versiegelung erreicht wird. Es ist daher Aufgabe der Erfindung, eine Vorrichtung der eingangs genannten Art derart weiter zu entwickeln, dass ein unerwünschtes Aufschmelzen der Kunststoffhüllen und/oder ein unvollständiges Versiegeln besser vermieden werden.

Diese Aufgabe wird erfindungsgemäß durch eine Vorrichtung mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, durch eine Steuerung oder Regelung der Heizleistung des Heizelements in Abhängigkeit von der Dicke der am Heizelement anliegenden Kunststoffhülle(n) einerseits ein zuverlässiges Versiegeln aller Kunststoffhüllen zu erreichen, andererseits aber ein unnötiges weiteres Aufschmelzen der Kunststoffhülle(n) im Bereich des Heizelements zu verhindern. Die beiden Lagen der Kunststofffolie sind an ihren einander zugewandten Innenseiten meist mit Material mit niedrigerem Schmelzpunkt, wie beispielsweise Polyethylen oder Polypropylen, beschichtet, während die einander abgewandten Außenseiten aus einem Material mit einem höheren Schmelzpunkt gefertigt sind. Dabei wird stets beabsichtigt, dass nur die Innenseiten entlang der Versiegelungslinie aufschmelzen und miteinander verschmelzen, nicht aber das Material an den Außenseiten, das dann am Gehäuse bzw. am Heizelement festkleben und die Vorrichtung beschädigen kann. Gemäß einer ersten Ausführungsform ist ein erster Temperatursensor zur Anlage an die Kunststoffhüllen an deren dem Heizelement abgewandten Seite vorgesehen, wobei die Steuer- oder Regeleinrichtung eingerichtet ist, das Heizelement auszuschalten, wenn die vom ersten Temperatursensor gemessene Temperatur einen vorgegebenen ersten Schwellwert überschreitet. Gemäß einer zweiten Ausführungsform ist ein zweiter Temperatursensor zur Anlage an die Kunststoffhüllen an deren dem Heizelement zugewandten Seite vorgesehen, wobei die Steuer- oder Regeleinrichtung eingerichtet ist, das Heizelement auszuschalten, wenn die vom zweiten Temperatursensor gemessene Temperatur einen vorgegebenen zweiten Schwellwert überschreitet. Beide Ausführungsformen können vorteilhaft miteinander kombiniert werden, wobei der zweite Schwellwert größer ist als der erste Schwellwert. Der erste Schwellwert ist dabei zweckmäßig mindestens so groß wie der Schmelzpunkt der innenseitigen Beschichtung der Kunststoffhüllen, während der zweite Schwellwert zweckmäßig höchstens so groß ist wie der Schmelzpunkt des die Außenseiten der Kunststoffhüllen bildenden Materials. Vorteilhaft weist das Heizelement einen Kaltleiter auf, dessen elektrischer Widerstrand sprunghaft ansteigt, wenn seine Temperatur den zweiten Schwellwert erreicht. Alternativ oder ergänzend zur Verwendung von einem oder zwei Temperatursensoren kann die Steuer- oder Regeleinrichtung eingerichtet sein, das Heizelement nach Ablauf einer vorbestimmten Heizdauer auszuschalten. Die vorbestimmte Heizdauer kann vom Benutzer manuell in Abhängigkeit von der Anzahl der in das Gehäuse eingelegten Kunststoffhüllen vorgegeben werden.

Um die Dauer des Evakuiervorgangs möglichst gering zu halten, wird bevorzugt, dass die Vakuumkammer ein geringes Volumen aufweist, insbesondere ein Volumen von höchstens 20 cm³, vorzugsweise von höchstens 10 cm³ und idealerweise von höchstens 5 cm³. Dabei ist es auch möglich, dass das Volumen der Vakuumkammer variierbar ist, um es an unterschiedliche Anwendungsgebiete anzupassen. Beispielsweise können Einsatzelemente vorgesehen sein, die in die Vakuumkammer eingesetzt werden, um deren Volumen zu reduzieren, und die zur Volumenvergrößerung wieder aus der Vakuumkammer entnommen werden können.

Zweckmäßig ist ein Drucksensor zur Messung des Drucks in der Vakuumkammer vorgesehen. Dabei kann die Steuer- oder Regeleinrichtung eingerichtet sein, das Heizelement einzuschalten, wenn der vom Drucksensor gemessene Druck einen Drucksollwert erreicht oder unterschreitet. Durch die Maßnahme wird das Einschalten des Heizelements automatisiert. Zudem wird vermieden, dass das Heizelement eingeschaltet wird, bevor der Evakuierungsvorgang hinreichend fortgeschritten ist.

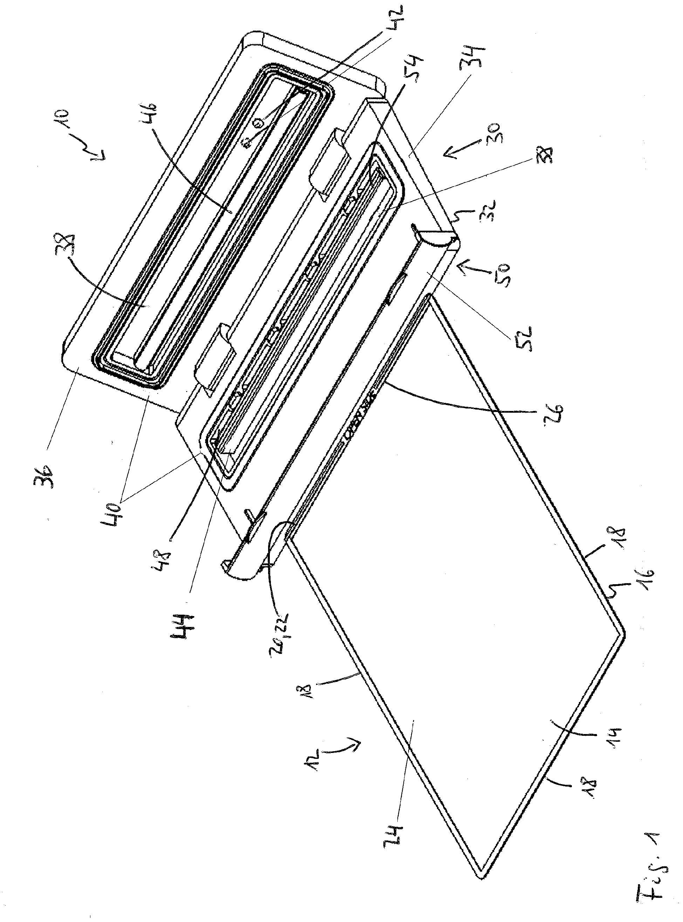

Im Folgenden wird die Erfindung anhand eines in der Zeichnung schematisch dargestellten Ausführungsbeispiels näher erläutert. Es zeigen
- Fig. 1: eine Vorrichtung zum Vakuumversiegeln von Kunststoffhüllen in geöffnetem Zustand zusammen mit einer Kunststoffhülle in perspektivischer Ansicht;

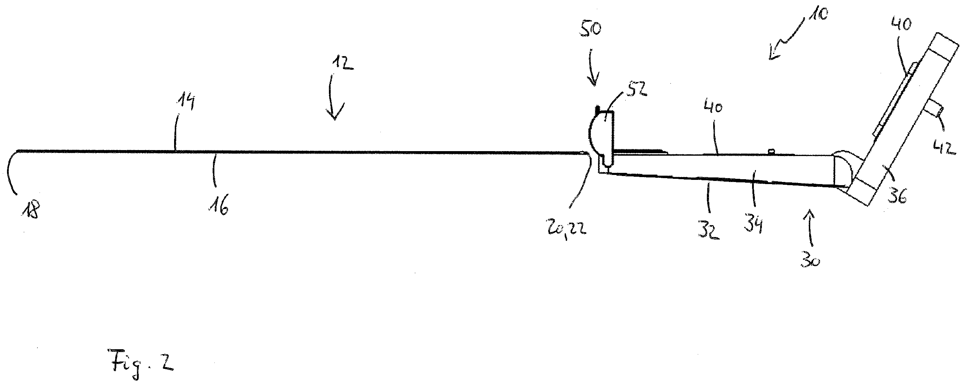

- Fig. 2: die Vorrichtung gemäß Fig. 1 in Seitenansicht;

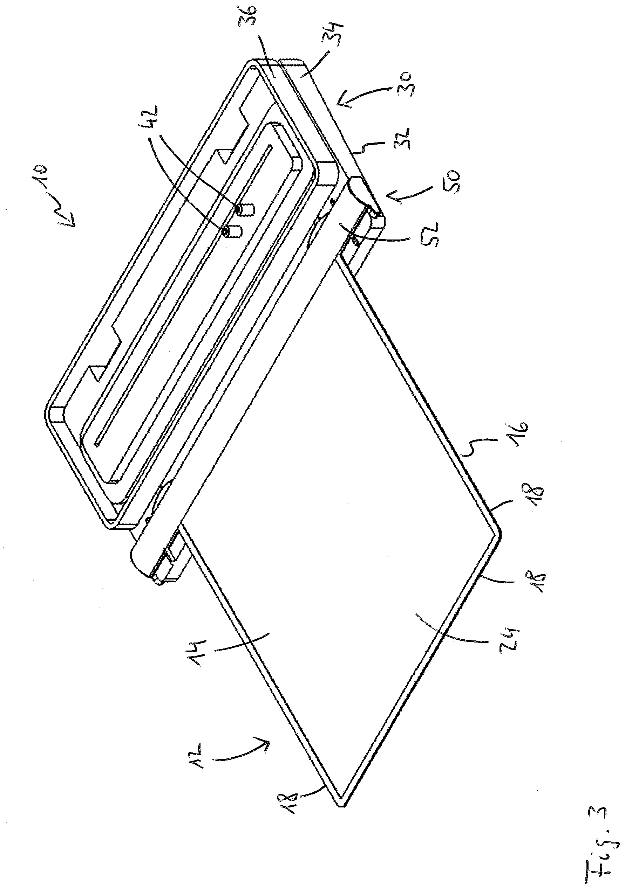

- Fig. 3: die Vorrichtung gemäß Fig. 1 in geschlossenem Zustand mit eingelegter Kunststoffhülle in perspektivischer Ansicht und

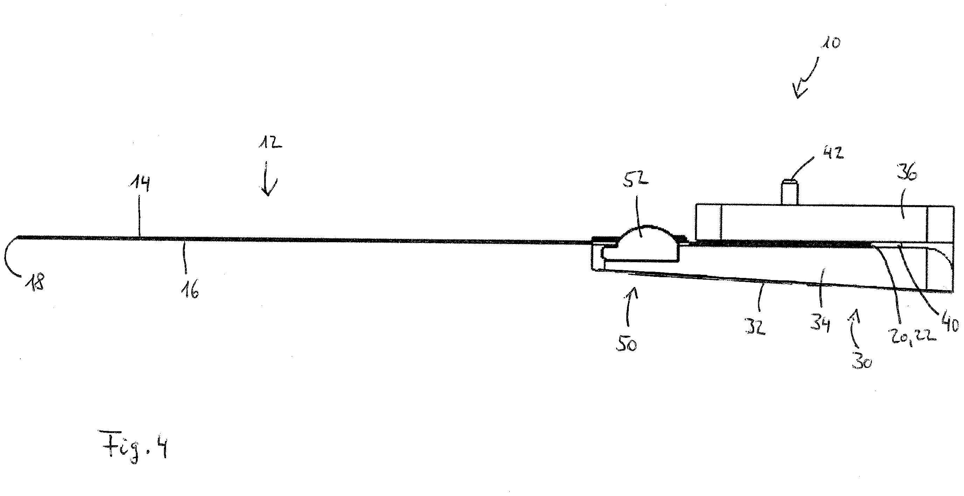

- Fig. 4: die Vorrichtung gemäß Fig. 3 in Seitenansicht.

Die in der Zeichnung dargestellte Vorrichtung 10 dient dem Vakkumversiegeln von Kunststoffhüllen 12, wobei die Kunststoffhüllen 12 jeweils zwei Lagen 14, 16 aus transparenter Kunststofffolie aufweisen, die an drei ihrer vier Seiten 18 fest miteinander verbunden sind und an der vierten Seite 20, an der Einschubseite, eine Einschuböffnung 22 freilassen. Durch die Einschuböffnung 22 wird vor dem Vakkumversiegeln ein Dokument 24 in die Kunststoffhülle 12 eingeschoben, das luftdicht in der Kunststoffhülle 12 versiegelt aufbewahrt werden soll. Zu diesem Zweck wird die Kunststoffhülle 12 mittels der Vorrichtung 10 entlang einer Versiegelungslinie 26 lokal aufgeschmolzen, so dass sich die beiden Folienlagen 14, 16 nach dem Abkühlen entlang der Versiegelungslinie 26 verbinden und das Dokument 24 luftdicht abgeschlossen in der Kunststoffhülle 12 aufgenommen ist. Zu diesem Zweck sind die Folienlagen 14, 16 jeweils an ihren einander zugewandten Innenseiten mit einem niedrig schmelzenden Material, wie beispielsweise Polyethylen oder Polypropylen, beschichtet. Die einander abgewandten Außenseiten der Folienlagen 14, 16 sind jeweils aus einem höher schmelzenden Material gefertigt, wobei die obere Folienlage 14, der die beschriftete Seite des Dokuments 24 zugewandt ist, aus einem möglichst transparenten Material besteht, während die untere Folienlage 16 ebenfalls transparent ist, aber vor allem steifer ausgebildet ist, beispielsweise durch geeignete Materialwahl oder durch Prägungen.

Die Vorrichtung 10 weist ein Gehäuse 30 auf mit einem eine unterseitige Aufstellfläche 32 zum Aufstellen auf beispielsweise einen Tisch aufweisenden Unterteil 34 und einem vom Unterteil 34 abnehmbaren Deckel 36, der im gezeigten Ausführungsbeispiel verschwenkbar am Unterteil 34 angelenkt ist. Das Unterteil 34 und der Deckel 36 begrenzen gemeinsam eine Vakuumkammer 38, die sich teilweise in das Unterteil 34 und teilweise in den Deckel 36 erstreckt. Umlaufende Dichtungen 40 am Unterteil 34 sowie am Deckel 36 dichten die Vakuumkammer 38 gegenüber der Umgebung ab, so dass sie mittels einer nicht näher dargestellten Vakuumpumpe durch Entlüftungsöffnungen 42 evakuiert werden kann. Zum Aufschmelzen der Folienlagen 14, 16 ist in der Vakuumkammer 38 im Unterteil 34 ein Heizelement 44 angeordnet, während im Deckel 36 ein Andrückelement 46 angeordnet ist, das die Folienlagen 14, 16 auf das Heizelement 44 drückt, wenn das Gehäuse 30 geschlossen ist.

Um die Kunststoffhülle 12 vor dem Schließen des Gehäuses 30 richtig bezüglich des Heizelements 44 positionieren zu können, ist ein Anschlagelement 48 an einer Begrenzungswand der Vakuumkammer 38 angeordnet, an das die Einschubseite 20 der Kunststoffhülle 12 angelegt wird. Um zu vermeiden, dass die Kunststoffhülle 12 beim Schließen des Gehäuses 30 sich aus dieser Position herausbewegt, ist am Gehäuse 30 außerhalb der Vakuumkammer 38 eine Fixiereinrichtung 50 angeordnet, die ein am Unterteil 34 angelenktes Klemmelement 52 aufweist. Die Kunststoffhülle 12 wird beim Einführen in das Gehäuse 30 unter dem Klemmelement 52 durchgeführt. Wenn sie mit der Einschubseite 20 am Anschlagelement 48 anliegt, wird das Klemmelement 52 gegenüber dem Unterteil 34 verschwenkt, so dass die Kunststoffhülle 12 zwischen dem Klemmelement 52 und dem Unterteil 34 eingeklemmt wird. Dann wird das Gehäuse durch Herunterklappen des Deckels 36 auf das Unterteil 34 geschlossen, die Vakuumkammer 38 wird mittels der Vakuumpumpe evakuiert, so dass auch die Kunststoffhülle 12 evakuiert wird, und nach Abschluss des Evakuierens wird die Kunststoffhülle 12 entlang der Versiegelungslinie 26 mittels des Heizelements 44 aufgeschmolzen. Das Heizelement 44 weist zudem eine durch die Kunststoffhülle 12 hindurch sichtbare optische Markierung 54 in Form eines Farbstreifens auf, die ebenfalls erkennen lässt, ob die Kunststoffhülle 12 bezüglich des Heizelements 44 richtig positioniert ist. Zudem kann in der Vakuumkammer 38 ein optischer Sensor vorgesehen sein, der direkt neben dem Heizelement 44 angeordnet ist und den Lichtdurchtritt durch die Kunststoffhülle 12 misst. Wenn der optische Sensor keinen Lichtdurchtritt misst, da dieser durch das Dokument 24 verhindert wird, ist dies ein Zeichen dafür, dass sich das Dokument 24 zu nah am Heizelement 44 befindet.

Die Vorrichtung 10 weist zudem eine nicht im Detail dargestellte Steuer- oder Regeleinrichtung zur Steuerung oder Regelung der Heizleistung des Heizelements 44 auf. Im Deckel 36 ist ein nicht im Detail dargestellter erster Temperatursensor zur Anlage an die obere Folienlage 14 angeordnet, während im Unterteil 34 nahe dem Heizelement 44 ein ebenfalls nicht im Detail dargestellter zweiter Temperartursensor zur Anlage an die untere Folienlage 16 angeordnet ist. Prinzipiell ist es möglich, mit der gezeigten Vorrichtung 10 in einem Arbeitsgang nur eine Kunststoffhülle 12 zu versiegeln. Es ist jedoch auch möglich, in einem Arbeitsgang gleichzeitig zwei oder noch mehr Kunststoffhüllen 12 übereinander liegend gleichzeitig zu versiegeln. In diesem Fall ist die Steuerung oder Regelung der Heizleistung des Heizelements 44 besonders vorteilhaft, da bei zu geringem Wärmeeintrag eine Versiegelung der untersten Kunststoffhülle 12 gegebenenfalls noch erfolgreich ist, während die oberste Kunststoffhülle 12 aber nicht mehr hinreichend versiegelt wird, während bei einem zu großen Wärmeeintrag zwar eine Versiegelung aller Kunststoffhüllen 12 stattfindet, diese aber auch an ihren Außenseiten in ungewünschter Weise aufgeschmolzen werden. Die Steuer- oder Regeleinrichtung ist dabei eingerichtet, das Heizelement 44 auszuschalten, wenn die vom ersten Temperatursensor gemessene Temperatur einen vorgegebenen ersten Schwellwert überschreitet, welcher höchstens der Temperatur entspricht, bei der die Kunststoffhüllen 12 an ihrer Außenseite schmelzen. Die Steuer- oder Regeleinrichtung ist zudem eingerichtet, das Heizelement auszuschalten, wenn die vom zweiten Temperatursensor gemessene Temperatur einen vorgegebenen zweiten Schwellwert überschreitet, welcher dem Schmelzpunkt der Beschichtung der Folienlagen 14, 16 an ihren Innenseiten entspricht.

In der Vakuumkammer 38 kann zudem ein in der Zeichnung nicht im Detail dargestellter Drucksensor angeordnet sein, der den Druck in der Vakuumkammer misst. Dabei kann die Steuer- oder Regeleinrichtung eingerichtet sein, das Heizelement 44 einzuschalten, wenn der vom Drucksensor gemessene Druck einen Drucksollwert erreicht oder unterschreitet.

Zusammenfassend ist folgendes festzuhalten: Die Erfindung betrifft eine Vorrichtung 10 zum Vakuumversiegeln von Kunststoffhüllen 12 aus zwei Lagen 14, 16 transparenter Kunststofffolie, die an drei ihrer vier Seiten 18 fest miteinander verbunden sind und an der vierten Seite 20 eine Einschuböffnung 22 freilassen, mit einem Gehäuse 30, das ein Unterteil 34 und einen vom Unterteil 34 abnehmbaren Deckel 36 aufweist, wobei zwischen dem Unterteil 34 und dem Deckel 36 eine Vakuumkammer 38 angeordnet ist, mit einer Vakuumpumpe zur Evakuierung der Vakuumkammer 38 und mit einem Heizelement 44 zum Aufschmelzen der Kunststoffhüllen 12 entlang einer Versiegelungslinie 26 an der vierten Seite 20. Erfindungsgemäß ist eine Steuer- oder Regeleinrichtung zur Steuerung oder Regelung der Heizleistung des Heizelements in Abhängigkeit von der Dicke der am Heizelement anliegenden Kunststoffhülle(n) vorgesehen.

## Patentansprüche

1. Vorrichtung zum Vakuumversiegeln von Kunststoffhüllen (12) aus zwei Lagen (14, 16) transparenter Kunststofffolie, die an drei ihrer vier Seiten (18) fest miteinander verbunden sind und an der vierten Seite (20) eine Einschuböffnung (22) freilassen, mit einem Gehäuse (30), das ein Unterteil (34) und einen vom Unterteil (34) abnehmbaren Deckel (36) aufweist, wobei zwischen dem Unterteil (34) und dem Deckel (36) eine Vakuumkammer (38) angeordnet ist, mit einer Vakuumpumpe zur Evakuierung der Vakuumkammer (38) und mit einem Heizelement (44) zum Aufschmelzen der Kunststoffhüllen (12) entlang einer Versiegelungslinie (26) an der vierten Seite (20), **gekennzeichnet durch** eine Steuer- oder Regeleinrichtung zur Steuerung oder Regelung der Heizleistung des Heizelements in Abhängigkeit von der Dicke der am Heizelement anliegenden Kunststoffhülle(n).

2. Vorrichtung nach Anspruch 1, **gekennzeichnet durch** einen ersten Temperatursensor zur Anlage an die Kunststoffhüllen (12) an deren dem Heizelement (44) abgewandten Seite, wobei die Steuer- oder Regeleinrichtung eingerichtet ist, das Heizelement (44) auszuschalten, wenn die vom ersten Temperatursensor gemessene Temperatur einen vorgegebenen ersten Schwellwert überschreitet.

3. Vorrichtung nach Anspruch 1 oder 2, **gekennzeichnet durch** einen zweiten Temperatursensor zur Anlage an die Kunststoffhüllen (12) an deren dem Heizelement (44) zugewandten Seite, wobei die Steuer- oder Regeleinrichtung eingerichtet ist, das Heizelement (44) auszuschalten, wenn die vom zweiten Temperatursensor gemessene Temperatur einen vorgegebenen zweiten Schwellwert überschreitet.

4. Vorrichtung nach Anspruch 2 und nach Anspruch 3, **dadurch gekennzeichnet, dass** der zweite Schwellwert größer ist als der erste Schwellwert.

5. Vorrichtung nach einem der Ansprüche 2 bis 4, **dadurch gekennzeichnet, dass** der erste Schwellwert mindestens der Temperatur entspricht, bei der die Kunststoffhüllen (12) an ihrer Innenseite unter Bildung der Versiegelungslinie (26) schmelzen und/oder dass der zweite Schwellwert höchstens der Temperatur entspricht, bei der die Kunststoffhüllen (12) an ihrer Außenseite schmelzen.

6. Vorrichtung nach einem der Ansprüche 3 bis 5, **dadurch gekennzeichnet, dass** das Heizelement (44) einen Kaltleiter aufweist, dessen elektrischer Widerstand sprunghaft ansteigt, wenn seine Temperatur den zweiten Schwellwert erreicht.

7. Vorrichtung nach einem der vorangehenden Ansprüche, **dadurch gekennzeichnet, dass** die Steuer- oder Regeleinrichtung eingerichtet ist, das Heizelement (44) nach Ablauf einer vorbestimmten Heizdauer auszuschalten.

8. Vorrichtung nach einem der vorangehenden Ansprüche, **dadurch gekennzeichnet, dass** die Vakuumkammer (38) ein Volumen von höchstens 20 cm³, vorzugsweise von höchstens 10 cm³ und idealerweise von höchstens 5 cm³ aufweist.

9. Vorrichtung nach Anspruch 8, **dadurch gekennzeichnet, dass** das Volumen der Vakuumkammer (38) variierbar ist.

10. Vorrichtung nach einem der vorangehenden Ansprüche, **gekennzeichnet durch** einen Drucksensor zur Messung des Drucks in der Vakuumkammer (38).

11. Vorrichtung nach Anspruch 10, **dadurch gekennzeichnet, dass** die Steuer- oder Regeleinrichtung eingerichtet ist, das Heizelement (44) einzuschalten, wenn der vom Drucksensor gemessene Druck einen Drucksollwert erreicht oder unterschreitet.
